# EUROPEAN PATENT APPLICATION

(11) **EP 2 362 202 A1**
(43) Date of publication of application: **31.08.2011**
(21) Application number: 11155419.2
(22) Date of filing: 22.02.2011
(51) Int. Cl.: G01L 3/10, G01P 3/487, G01P 15/08, G01P 15/105

(54) **Method of magnetic encoding sections of a shaft and system for measuring parameters of the rotating shaft**

(30) Priority: 26.02.2010 US 714256; 18.02.2010 US 708117
(71) Applicant: General Electric Company, Schenectady, NY 12345 (US)
(72) Inventor: Sihler, Christof Martin, Niskayuna, NY 12309 (US); Zols, Thomas Alois, Niskayuna, NY 12309 (US); Bray, James William, Niskayuna, NY 12309 (US); Raum, Klaus Franz Otto, 85356, Freising (DE)
(74) Representative: Bedford, Grant Richard

(57) **Abstract**

A method (600) for non-contact measurement of multiple shaft parameters is provided. The method includes magnetically encoding (602) multiple sections of the shaft (12, 52, 102, 302) using pulsed currents. The method also includes sensing (604) a magnetic field of the encoded sections of the shaft using multiple sensors arranged circumferentially about the shaft. Further, the method includes generating (606) a spectrum of periodical variations based on sensed magnetic field of the encoded sections (64, 66, 68, 70) of the shaft during rotation and determining (608) multiple parameters based on recurrences of patterns of the spectra.

## Description

### BACKGROUND

The invention relates generally to a non-contact measurement of rotating shaft parameters and more particularly to a method and system for sectional magnetic encoding and sensor arrangement for measuring shaft parameters.

Generally, there are numerous applications of rotating shafts in industries for accomplishing some form of work or energy conversion. Rotating shafts are still used on current windmills and hydroelectric plants, however they incorporate advanced technology and processing. Rotating shafts are also used in electronic equipment such as computer disk drives, media recorders/players, and household appliances, and are generally of a smaller length and width such that the torque is relatively small. Larger rotating shafts experience larger torque and are deployed in applications including locomotives, airplanes, ships, and energy conversion to name just a few examples. The modem usage of equipment utilizing larger rotating shafts typically incorporates sensing and processing capabilities to achieve safe and efficient operation. This necessitates the requirement of measuring various shaft parameters such as angular velocity, acceleration, torque, and rotational anomalies to address the design and operation of equipment utilizing rotating shafts. Conventional technologies employ a number of different systems of sensing or measuring the shaft parameters such as strain gauge systems, encoder/tooth systems, acoustic wave systems, elastic systems, magnetostrictive systems, and magnetoelastic systems. Each of these systems has certain characteristics and applications.

Strain gauges provide for local strain measurements of the shaft and typically require some form of coupling to the rotating shaft that can be via a physical connection (e.g.: slip rings) or telemetry. The gauges generally suffer from low stability, have limitations in the bandwidth and tend to have calibration and environmental correction requirements. The limited operating temperature range of strain gauges limits their use in a harsh environment.

The encoder/tooth-wheel pickup style of shaft parameters sensing usually has at least some partial attachment to the rotating shaft such as by a magnetic tooth-wheel. The tooth-wheel design tends to be costly and impractical for many implementations. Such a design is not practical for higher speed applications and although stable, lacks high resolution and can cause reliability issues in harsh environment.

The acoustic wave systems utilize sensors such as surface acoustic wave (SAW) and bulk acoustic wave (BAW) devices that use acoustic waves to detect strain-induced changes to the shaft via telemetry with transducers connected on the shaft. The application of acoustic wave technology to shaft parameter sensing is relatively new and the present systems are being used for smaller shafts that have high manufacturing tolerances.

The elastic torque systems measure the twisting of the shaft by using markers across a length of the shaft and measuring the angular displacement. This system has accuracy issues when applied to large diameter shafts, and there are practical implementation problems. Moreover, making direct use of the magnetostrictive effect for measuring shaft parameters in ferromagnetic material requires complex sensor arrangements, difficult calibration procedures and typically results in limited accuracy.

Accordingly, there exists a need for efficient non-contact measurement of high resolution rotating shaft parameters in a harsh environment to address the design and operation of equipment utilizing rotating shafts.

### BRIEF DESCRIPTION

In accordance with an embodiment of the invention, a method for non-contact measurement of multiple shaft parameters is provided. The method includes magnetically encoding multiple sections of the shaft using pulsed currents. The method also includes sensing a magnetic field of the encoded sections of the shaft using multiple sensors arranged circumferentially about the shaft. Further, the method includes generating a spectrum of periodical variations based on sensed magnetic field of the encoded sections of the shaft during rotation and determining multiple parameters based on recurrences of patterns of the spectra.

In accordance with another embodiment of the invention, a system for measuring a plurality of operating parameters of a shaft is provided. The system includes multiple magnetic encoded regions circumferentially disposed about a shaft. The system also includes one or more sensors proximate to the shaft and at least some of the encoded regions, wherein the sensors enable measurement of magnetic field properties of the encoded regions. Further, the system includes a processor for processing the magnetic field properties and computing shaft parameters.

In accordance with yet another embodiment of the invention, a method for encoding of magnetic sections in a shaft is provided. The method includes disposing at least one conducting member in close proximity about a section of the shaft. The method further includes disposing electrodes onto the shaft proximate to a first end and a second end of the conducting member. The method includes providing a second end electrode coupled to the second end of the conducting member. The method also includes electrically coupling a first end electrode to a current source and further coupling the current source to the first end of the conducting member. Finally, the method includes applying unipolar current pulses to the conducting members thereby inducing sectional encoding regions.

### DRAWINGS

These and other features, aspects, and advantages of the present invention will become better understood when the following detailed description is read with reference to the accompanying drawings in which like characters represent like parts throughout the drawings, wherein:
FIG. 1 is an encoding system in accordance with an embodiment of the present invention.
FIG. 2 is a cross sectional illustration of the magnetic flux density in the shaft associated with one embodiment.
FIG. 3 shows a measurement system having magnetic encoded sections in a shaft and an arrangement of sensors about the shaft in accordance with one embodiment of the present invention.
FIG. 4 shows a measurement system having magnetic encoded sections in a shaft and an arrangement of sensors about the shaft in accordance with another embodiment of the present invention.
FIG. 5 shows a measurement system having a sensor arrangement around the magnetic encoded shaft in accordance with yet another embodiment of the present invention.
FIG. 6 is a spectrum illustrating measured flux density of a magnetically encoded rotating shaft in accordance with an embodiment of the present invention.
FIG. 7 shows a flowchart for the encoding of magnetic sections configured in accordance with one embodiment of the present invention.
FIG. 8 shows a flowchart for non-contact measuring of rotating shaft parameters in accordance with an embodiment of the present invention.

### DETAILED DESCRIPTION

As discussed in detail below, embodiments of the invention are directed towards a non-contact measurement of rotating shaft parameters. As used herein, the phrase 'magnetic encoding' refers to magnetization of a section of shaft by flowing current in an axial direction of the shaft. The present invention addresses a system and method of sectional magnetic encoding and sensor arrangement about the magnetic encoded shaft for measuring various shaft parameters during rotation of the shaft.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments.

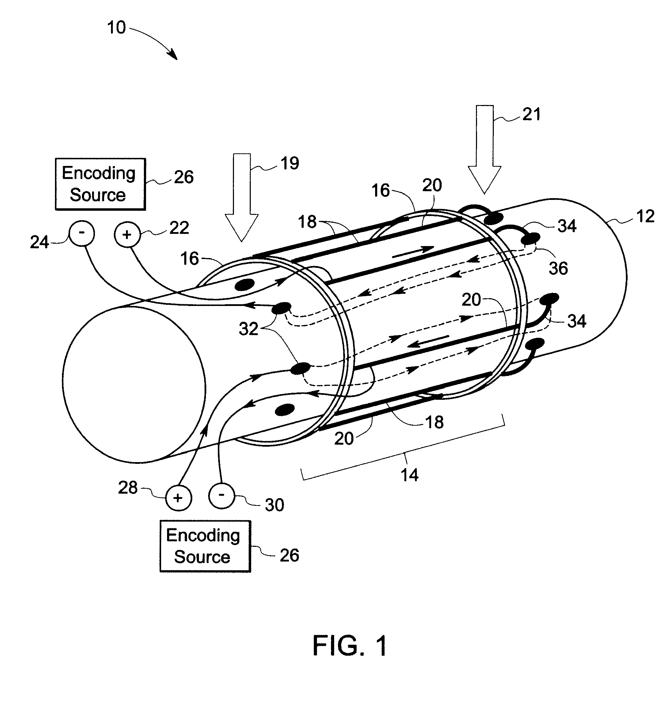

Fig. 1 illustrates a magnetic encoding system 10 for sectional encoding of magnetic polarized regions or channels on a shaft 12 in accordance with an embodiment of the present invention. In one embodiment, the shaft 12 can be a ferromagnetic material. In another embodiment, the shaft 12 can be a non-ferromagnetic material including at least a section of ferromagnetic material affixed to the non-ferromagnetic shaft. A non-limiting example of the section may include a thin magnetic collar attached to a non-ferromagnetic shaft. The magnetic encoding system 10 includes an encoding structure 14 disposed about at least a section of the shaft 12. The encoding structure 14 further includes a frame 16 having one or more sets of conducting members 18 and 20. In one embodiment as illustrated, the encoding structure 14 is a unit that is coupled proximate to the shaft 12 during encoding such that the conducting members 18, 20 extend along at least a portion of the shaft 12. The conducting members 18, 20 are arranged such that the conducting members 18 provide positive encoding and conducting members 20 provide negative encoding. Both the conductors 18, 20 are connected to a positive terminal and a negative terminal respectively of an encoding source 26. In one embodiment, the encoding source 26 generates unipolar current pulses from a few tens of amperes to a few kilo-amperes with pulse length in the range between about 10 microseconds to tens of milliseconds. One example of an encoding source is based on a capacitor bank or a power electronic device generating the desired unipolar current waveforms. Another example of an encoding source is a pulse generator. In one embodiment the current pulses are short and can be characterized by a high frequency content. Further, the frame 16 of the encoding structure 14 is typically a non-conductive material such that the conducting members 18, 20 are isolated.

The encoding can be done during manufacture of the shaft 12 or post installation and is permanent when applied to the right type of material and created with high current densities. In one embodiment as illustrated, the encoding structure 14 is depicted as encircling the shaft 12 and may include additional frame elements (not shown) to maintain its orientation and position about the shaft 12. This may include frame supports (not shown) to ensure the conducting members 18, 20 are arranged properly and sufficient for the encoding operation. While the encoding structure 14 goes around the shaft 12, there is no requirement for the encoding structure 14 to encircle the shaft with conducting members. In a further embodiment, the encoding structure 14 is located proximate to a portion of the shaft 12 and may include multiple encoding structures arranged about the shaft such that each of the encoding structures 14 generates magnetic polarized regions.

The conducting members 18, 20 are disposed proximate the shaft 12 with a gap between the members 18, 20 and the exterior surface of the shaft 12. Non-limiting example of the conducting members 18, 20 include reinforced isolated copper bars. The use of any other suitable conductors for the conducting members 18, 20 are also within the scope of the encoding system 10. Further, non-limiting examples of the conducting members 18, 20 can be bars with a shape that can be round, oval, square or rectangular. The length of the conducting members 18, 20 can vary depending upon the design criteria. Longer conducting members 18, 20 can provide greater surface area for sensing. The diameter of the conducting members 18, 20 should have sufficient rigidity and provide for the required current pulses.

The conducting members 18, 20 include a first end 19 and a second end 21. Each of the first end 19 and the second end 21 is coupled to an encoding source 26 and the shaft 12 respectively. In order to electrically couple the conducting members 18, 20 to the encoding source 26, electrical connectors 22, 24, 28, 30 are provided at the first end 19 of the conducting members 18, 20. The encoding system 10 includes multiple first end electrodes 32 that are used to establish electrical connections from the shaft 12 to the encoding source 26. The system 10 further includes multiple second end electrodes 34 that are used to establish electrical connections from the second end 21 of the conducting members to the shaft 12. The first and second end electrodes 32, 34 refer to the electrical coupling to the shaft 12. In one embodiment, the first end electrodes 32 are conductive elements coupled about the non-conductive frame 16 that contact the shaft 12. In another embodiment, the second end electrodes 34 refer to a conductive element that extends from the second end 21 of the conducting members 18, 20 to the shaft 12. The electrodes may also be points of contact with jumpers or wires that connect to the shaft 12.

Furthermore, the first end 19 of the positive conducting members 18 is coupled to the positive terminal of the encoding source 26 along the positive electrical connector 22. The negative terminal of the encoding source 26 is coupled to the electrode 32 and the shaft 12 via an electrical connector 24. For the negative conducting members 20, the negative terminal of the encoding source 26 is coupled to the first end 19 of the negative conducting member 20 along electrical connector 30. The positive terminal of the encoding source 26 is connected to the electrode 32 and the shaft 12 via electrical connector 28 with regard to the conducting member 20.

In one embodiment, an electrical current 36 as shown, travels through the shaft 12 such that magnetized regions are generated on the shaft 12. One of the features of the encoding system 10 is the ability to magnetically encode channels or magnetic polarization regions in the shaft 12. In particular, ferromagnetic steel shafts have a high relative permeability and the electric currents that travel through the steel shaft create distinct encoded channels. As illustrated, the positive polarity current pulse at electrical connector 22 is coupled to the conducting member 18 and the current pulse travels along the conducting member to an electrode 34 that contacts the shaft 12 about the second end 21. The current discharged by the second end electrode 34 travels back along the shaft 12 to the first end electrode 32 and the negative connection of the encoding source 26 via the electrical connector 24. The electrical current 36 flowing along the shaft 12 creates a polarized magnetic channel on the shaft 12. Each of the adjacent conducting members in the encoding structure 14 have alternating polarities and the pulse encoding may be used to simultaneously encode the conducting members all at one time, grouped, or individually. For example, the first set of positive conducting members 18 can be encoded simultaneously followed by the negative set of conducting members 20.

In one embodiment, the conducting members 18, 20 include rigid or semi-rigid bars that define a path for the current flow in a longitudinal direction, circumferentially or diagonally along the shaft 12. According to one embodiment, a cage assembly is utilized to position such conducting members about the shaft in a secure manner for the encoding process. In another embodiment, the cage with the conducting members is affixed about the shaft 12 such that the shaft 12 and the cage are in a fixed relationship to each other until encoding is completed.

In one embodiment, the encoding system employs four conducting members uniformly distributed approximately ninety degrees apart. Such an encoding system including the shaft may have four segments. One encoding source can be used to apply the current pulses to each of the four current encoding sources with alternating polarities. In another embodiment, there are four separate encoding sources, thereby avoiding short-circuits between the different encoding currents during the encoding process. In another example, a switching scheme can be employed to apply the current pulse signals with alternating polarities.

While the conventional techniques rely upon total circumferential shaft magnetization, one embodiment of the system herein encodes magnetic channels in the shaft using the return currents. The sectional magnetic encoding takes advantage of the asymmetrical skin effect and the fact that a current always takes the path of least impedance. The impedance is dominated by inductance if the frequency of the current is high enough. In the case of a short current pulse the return current flowing in the shaft will be more localized than in the case of a longer pulse, enabling polarized and well defined/narrow magnetic patterns. This effect is used to magnetize sections of a shaft with more localized channels that lead to faster changes in the magnetic field during sensing. Therefore, the pulse length during encoding affects the signal frequencies observed during sensing application.

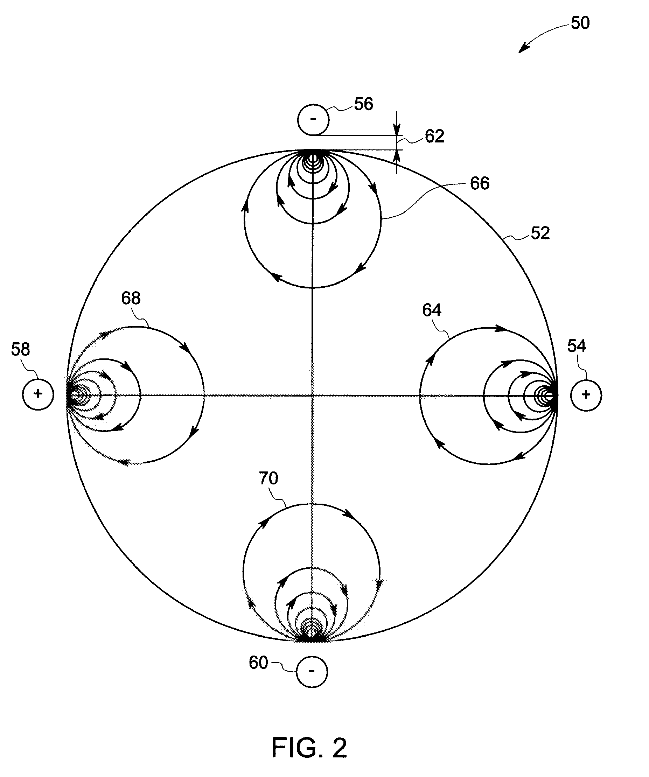

FIG. 2 is a cross sectional view 50 of a magnetic encoded shaft 52 showing the magnetic flux density in the shaft 52 associated with one embodiment of the present invention. According to the illustrated embodiment, the encoding involves four conducting members 54, 56, 58, 60 proximate the shaft 52 that apply encoding pulses and uses the return current flowing through the shaft 52 to encode the shaft 52. The four conducting members 54, 56, 58, 60 are spaced approximately 90 degrees about the shaft 52. A gap 62 between conducting members 54, 56, 58, 60 and the shaft 52 is typically small so that stronger field is generated and less energy required. In one embodiment, the gap 62 is less than 1 mm and may include an isolating sheet (not shown) between the conducting members 54, 56, 58, 60 and the shaft surface. Tolerance is generally not problematic as this is only used during the encoding process and not during the shaft operation. The conducting members 54, 56, 58, 60 illustrate the alternating opposing polarities used during the encoding process by an encoding source (not shown) such that there are positive polarity members 54, 58 and negative polarity members 56, 60. The encoding generates the sectional polarized magnetic regions 64, 66, 68, 70. For better illustration, the magnetic field lines shown in FIG. 2 belong to a magnetization with DC currents. When performing the magnetic encoding with DC current pulses, the skin effect prevents the magnetic field lines from penetrating the whole shaft cross section. Instead, they are concentrated near the shaft surface. The current penetration, namely the depth of the current density in the shaft 52, is controlled by the duration of the current pulse in one embodiment. The current pulses are unipolar in this example, and are positive current pulses without the negative half-wave, or without the positive half-wave if negative current pulses are applied.

In one embodiment, the current pulses are generated by discharging a capacitor bank, wherein the size of the discharge resistor determines the discharge time constant and therefore the depth of the current penetration. In another embodiment, the sectional encoding method in one example uses five consecutive 500A current pulses with a pulse length of about 5 ms each to generate permanent magnetic flux densities of about 5 Gauss used to encode an industrial steel shaft with a diameter of 60 mm. The shorter the DC current pulse length, the higher the current and flux density near the shaft surface. This is advantageous for measuring shaft parameters based on magnetic field measurements because the highest magnetic flux densities are created close to the shaft surface, in about one or more millimeters radial distance to the magnetic field sensors.

According to a simple encoding approach in one embodiment, a magnetized section is encoded one circuit at a time. For example, a positive polarity current pulse can be applied to encode a first encoded section followed by another section magnetized by applying a second circuit with a negative polarity. Subsequent sections are encoded using alternating polarity current pulses.

Such a sequential encoding process with alternating polarity current pulses creates multiple almost identical encoded sections. If only one current pulse is applied to each section to be magnetized, the sections are generally not identical because magnetizing the second section also affects the first magnetized section. This undesired interaction is higher in the middle of the encoding tool than at the beginning and end of it, where the electrodes contact the shaft. Almost identical encoded sections can be achieved in performing sequential current pulses, alternating the sections while magnetizing and by performing the magnetic field measurements close to the regions where the electrodes contact the shaft. Another example for sequentially creating magnetized zones in the shaft measures the field strength created in each segment or zone and adapts the amplitude of the current pulses for the subsequent encoding steps. To avoid that the influence of sequential magnetization of one section by the next magnetization, another encoding embodiment is to apply the same current amplitude to all the conducting members and encoding all the sections at once. In one embodiment, the conducting members would use separate or split encoding sources to accommodate the multiple conducting members. In one example, separate capacitor banks would be used for each conducting member.

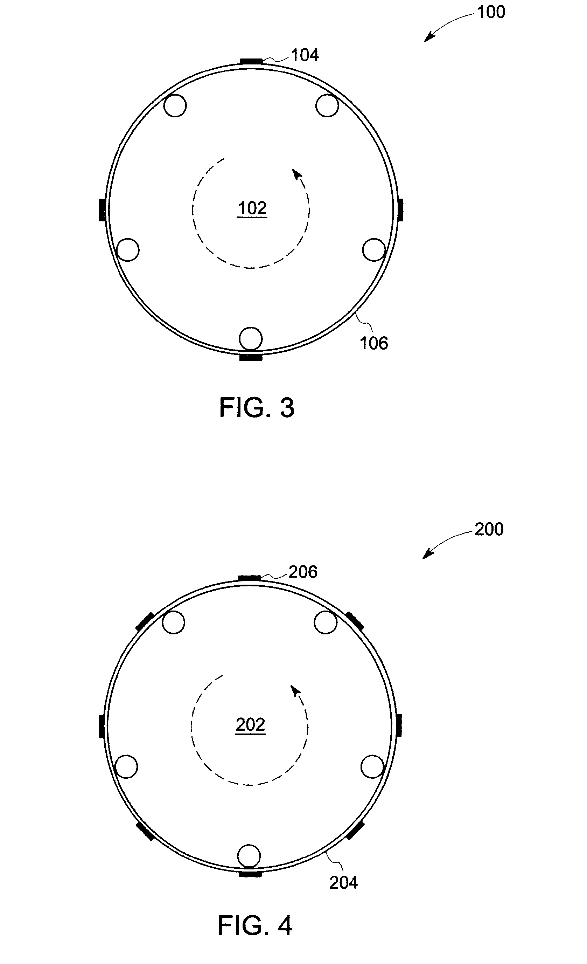

FIG. 3 illustrates a simplified measurement system 100 having a magnetic encoded shaft 102 in a cross-section view along with multiple sensors 104 arranged circumferentially around the shaft 102 in accordance with an embodiment of the present invention. The multiple sensors 104 are arranged tangential to or parallel to the surface of the shaft 102. During operation, the multiple sensors 104 are configured to pick up the period, frequency, slope, or combinations thereof, of the magnetic field of multiple magnetically encoded polarized regions 106 of the rotating shaft 102. Non-limiting examples of the sensor may include a Hall effect sensor, a magnetic field sensor, a sensor coil with an air-core, a fluxgate sensor, an anisotropic magnetostrictive sensor, and a giant magneto-resistive (GMR) sensor. Further non-limiting examples of magnetic field sensors include fluxgate magnetometers, search coils, fiber-optic magnetometers, optically pumped magnetometers, SQUIDS, and nuclear precession magnetometers. In one embodiment, the measurement system employs multiple permanent magnetic encoded speed sensors provided at different axial locations of the shaft. The multiple sensors 104, thus, pick up all the frequency components of the rotating shaft 102.

As illustrated, the number of magnetically encoded polarized regions 106 depends upon the encoding and the design criteria, such as the diameter of the shaft 102. However, the number of sensors 106 disposed around the magnetic encoded shaft 102 may vary depending upon the need for acquiring sampling rates for processing the measured magnetic field. In one embodiment, as shown in FIG. 3, the number of magnetically encoded polarized regions and sensors arranged are five and four respectively for acquiring twenty measured sample values per revolution of the shaft 102. In another embodiment of a measuring system 200, as shown in FIG. 4, the number of magnetically encoded polarized regions 204 and sensors 206 arranged are five and eight respectively for acquiring forty measured sample values per revolution of the shaft 202.

Furthermore, the processing of the measured magnetic field is typically carried out using a processor (not shown). The processor is further configured to compute various shaft parameters such as angular velocity, angular acceleration, rotational frequency spectrum and torque of the shaft. Various rotational anomalies such as vibration, shock, misalignment and imbalance in the rotating shaft can also be computer by the processor. Thus, the processor may compute the sensor outputs to measure shaft parameters with high long-term stability. It should be noted that embodiments of the invention are not limited to any particular processor for performing the processing tasks of the invention. The term "processor," as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks of the invention, as will be understood by those skilled in the art.

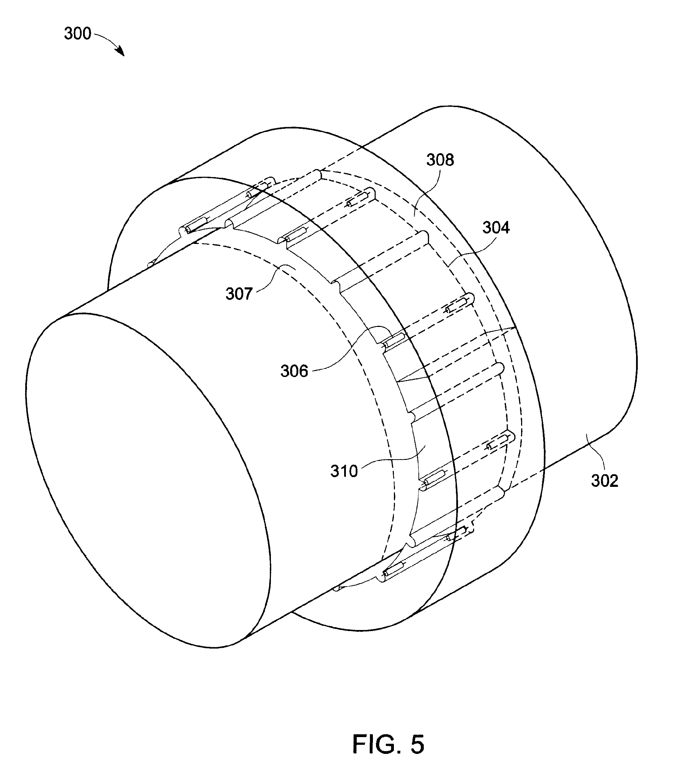

FIG. 5 illustrates a measurement system 300 having a sensor arrangement around a magnetic encoded shaft 302 in accordance with yet another embodiment of the present invention. The measurement system 300 includes a sensor ring assembly 304 arranged circumferentially about the sectional magnetic encodings 307 of the shaft 302. The sensor ring assembly 304 has an array of sensors 306. The sensor ring assembly 304 can be a portion of the circumference of the shaft 302 or disposed about the entire circumference. In certain embodiments, the multiple sensors 306 are integrated into an existing metallic sensor holder 310 such that a separate sensor assembly is not required and the integrated structure performs the functionality of the sensor ring assembly 304. The metallic sensor holder 310 can provide a plurality of sensor slots 308 such that any number of sensors 306 can be deployed. One advantage of the metallic sensor holder 310 is that it provides screening against external magnetic field components.

According to another embodiment, the measuring system 300 deploys sensors such as sensing coils and therefore obtains greater frequency of readings and greater reliability. The sensing coils are relatively inexpensive and multiple coils can be easily deployed in a sensor holder 310. In one example, there are multiple sensors 306 disposed within the sensor ring assembly 304. According to one embodiment the multiple sensors 306 are used to provide greater reliability by allowing more frequent measurements. The multiple sensors 306 can also be used to provide redundancy so that the sensing functions are operable even with some sensor failure. In another example, different types of sensors are deployed such that different types of data can be measured. The multiple sensor types can take advantage of the sensing properties of the particular sensor or otherwise allow for enhanced sensing functionality. In a further embodiment, the sectional encoding process includes different encoding sections having different encoding properties such that the sensors can obtain multiple forms of data.

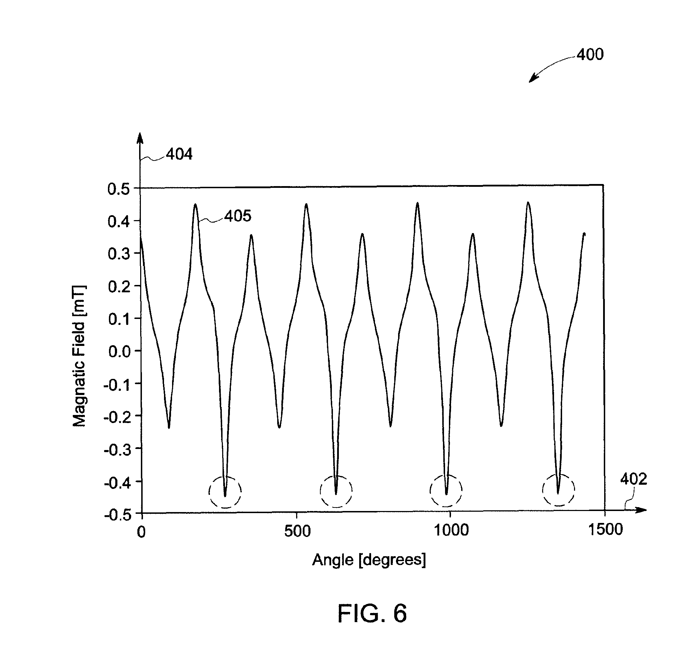

FIG. 6 is a spectrum 400 illustrating measured flux density of a magnetically encoded rotating shaft in accordance with an embodiment of the present invention. The X-axis 402 represents rotating angle of the magnetic encoded shaft measured in degrees units. The Y-axis 404 represents magnetic field measured in mili-Tesla units. By way of an example, the spectrum 400 illustrates a measured flux density of a rotating shaft with two positive and two negative magnetic polarized regions per revolution. The spectrum 400 shows well-defined shapes of sensed magnetized flux 405 and peaks 406 of the maximum magnetic field of the magnetic encoded polarized region of the shaft. In a particular embodiment, a rotating shaft parameter such as an angular velocity can be measured by determining the occurrences of the maximum magnetic field of the magnetically encoded polarized regions. The maximum magnetic fields depicted by the peaks 406 are sensed by a sensor element of the sensor ring assembly. The time difference for two sensor elements of the sensor ring assembly may be used to measure the angular velocity.

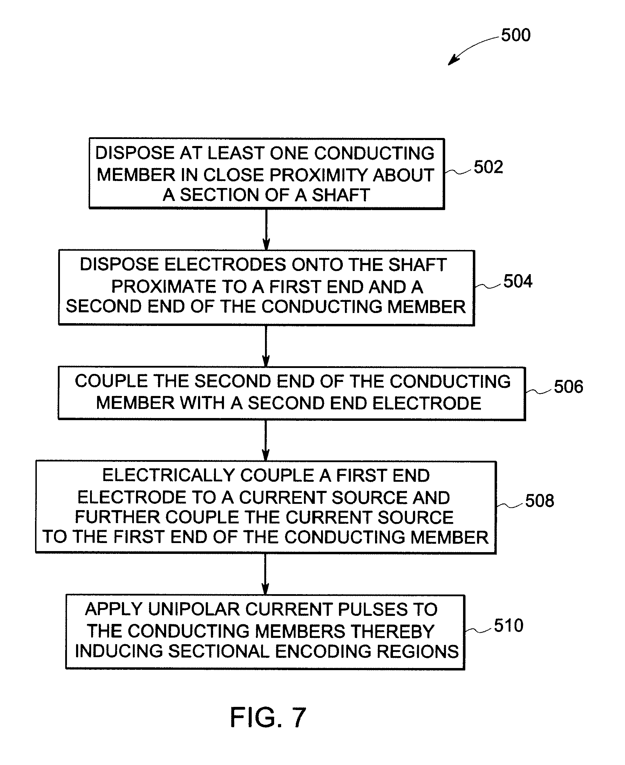

FIG. 7 shows a flowchart 500 for encoding of magnetic sections in a shaft in accordance with one embodiment of the present invention. The method includes disposing at least one conducting member in close proximity about a section of the shaft in step 502. The method further includes disposing electrodes onto the shaft proximate to a first end and a second end of the conducting member in step 504. At step 506, a second end electrode is coupled to the second end of the conducting member. Further, the method includes electrically coupling a first end electrode to a current source and coupling the current source to the first end of the conducting member in step 508. Finally, the method includes applying unipolar current pulses to the conducting members thereby inducing sectional encoding regions in step 510. In one embodiment, the method includes disposing at least two conducting members oriented adjacent to each other and encoding is carried out with opposing polarities such that the resulting polarized magnetic channels have domain boundaries.

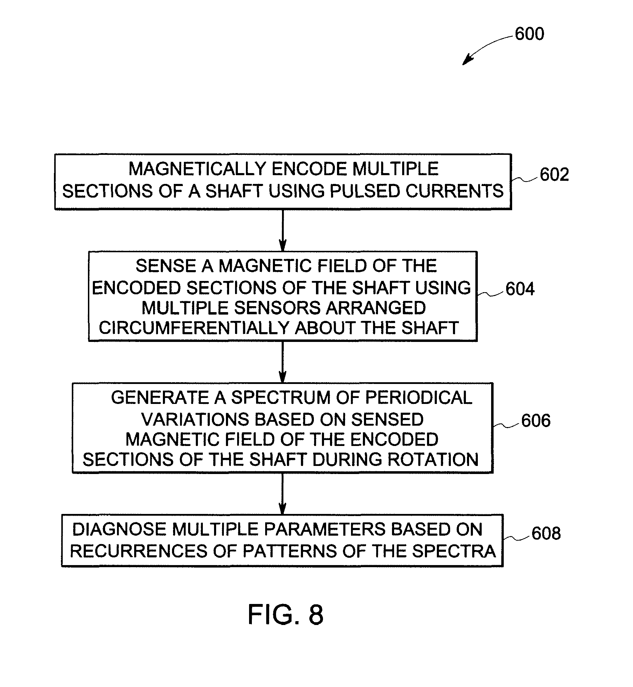

FIG. 8 shows a flowchart 600 for non-contact measuring of rotating shaft parameters in accordance with an embodiment of the present invention. At step 602, the method includes magnetically encoding multiple sections of the shaft using pulsed currents. The method also includes sensing a magnetic field of the encoded sections of the shaft using multiple sensors arranged circumferentially about the shaft in step 604. In one embodiment, the sensors may include Hall effect sensors. In another embodiment, the sensors may include magnetic field sensors. Non-limiting examples of magnetic field sensors include fluxgate magnetometers, search coils, fiber-optic magnetometers, optically pumped magnetometers, SQUIDs, and nuclear precession magnetometers. Further, the method includes generating a spectrum of periodical variations based on sensed magnetic field of the encoded sections of the shaft during rotation in step 608. Finally, at step 610, the method includes diagnosing multiple parameters based on recurrences of patterns of the spectra. Non-limiting examples of the multiple parameters includes angular velocity, angular acceleration, rotational frequency spectrum, torque and rotational anomalies such as vibration, shock, misalignment and imbalance in the shaft.

Advantageously, the encoding method and system according to one embodiment enables highly accurate measurements of angular velocity, angular acceleration, rotational frequency spectrum, direct power, torque, and/or bending moment for rotating machinery. The present invention makes it possible to locate the sensor electronics at some distance from the sensors and up to several meters away from the sensor installation to enable measurement in harsh environments (oil, grease, dust, temperatures of about 300 degrees, etc.). The magnetic encoding within the shaft thus remains unaffected due to pollution. Also, the magnetic field sensors may have encapsulation or metallic sensor holder for screening against external magnetic field components. Further, one of the features of the system detailed herein is the non-contact measurement of speed, acceleration, shaft power, torque and/or rotational anomalies based on sensing AC field components with respect to the shaft. High sampling rates can simply be achieved in shafts rotating at high speed, for example, high-speed electrical machines (e.g. 20000 rpm) where no attachments to the rotor are desired. Moreover, the present invention is applicable to measuring high-resolution speeds.

Furthermore, the present invention also provides a non-contact measurement system as nothing is attached to the rotating shaft during operation. This non-contact system enables direct monitoring of the shaft power that is extremely relevant for detecting efficiency decreases in different sections of a shaft system such as large turbine trains.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A method for non-contact measurement of a plurality of shaft parameters, comprising:
   magnetically encoding a plurality of sections of the shaft using pulsed currents;
   sensing a magnetic field of the encoded sections of the shaft using a plurality of sensors arranged circumferentially about the shaft;
   generating a spectrum of periodical variations based on sensed magnetic field of the encoded sections of the shaft during rotation; and
   determining a plurality of parameters based on recurrences of patterns of the spectrum.
2. The method of clause 1, wherein the magnetic encoding comprises disposing at least one conducting member in close proximity about a section of said shaft, said conducting member having a first end and a second end.
3. The method of clause 1 or clause 2, wherein the magnetic encoding comprises disposing electrodes onto said shaft proximate the first end and the second end, wherein said second end electrode is coupled to said second end of said conducting member.
4. The method of any preceding clause, wherein the magnetic encoding comprises electrically coupling said first end electrode to a current source and coupling said current source to said first end of said conducting member.
5. The method of any preceding clause, wherein the magnetic encoding comprises applying unipolar current pulses to said conducting members thereby inducing sectional encoding regions.
6. The method of any preceding clause, wherein the plurality of parameters comprises angular velocity, angular acceleration, rotational frequency spectrum and torque of the shaft.
7. The method of any preceding clause, wherein the plurality of parameters comprises rotational anomalies.
8. The method of any preceding clause, wherein the rotational anomalies comprises vibration, shock, misalignment and imbalance in the shaft.
9. A system for measuring a plurality of operating parameters of a shaft, comprising:
   a plurality of magnetic encoded regions circumferentially disposed about a shaft;
   one or more sensors proximate to said shaft and at least some of the encoded regions,
   wherein said sensors enable measurements of magnetic field properties of the encoded regions; and
   a processor for processing said magnetic field properties and computing shaft parameters.
10. The system of clause 9, wherein the sensors comprises Hall effect sensors.
11. The system of clause 9 or clause 10, wherein the sensors comprises magnetic field sensors selected from a group consisting of fluxgate magnetometers, search coils, fiber-optic magnetometers, optically pumped magnetometers, SQUIDS, and nuclear precession magnetometers.
12. The system of any of clauses 9 to 11, wherein the sensors are arranged tangential or parallel to the surface of the shaft..
13. The system of any of clauses 9 to 12, wherein the system includes a sensor ring assembly comprising an array of sensors and a metallic sensor holder for providing sensor slots and further provides screening against external magnetic field components.
14. The system of any of clauses 9 to 13, wherein the shaft is comprised of a ferromagnetic material, said shaft is a hollow shaft or a solid shaft.
15. The system of any of clauses 9 to 14, wherein the system comprise measuring the plurality of parameters of a non-magnetic shaft by sensing a magnetic encoded collar or yoke coupled to the non-magnetic shaft.
16. The system of any of clauses 9 to 15, wherein the system further comprises a magnetic encoding subsystem for sectional encoding of magnetic polarized regions or channels on the shaft.
17. The system of any of clauses 9 to 16, wherein the magnetic encoding subsystem comprises at least one conducting member having a first end and a second end which is disposed proximate said shaft with a gap between said member and said shaft, a pair of electrodes proximate each end of said conducting member and electrically coupled to said shaft, wherein one of said electrodes is electrically coupled to said second end of the conductor member.
18. The system of ay of clauses 9 to 17, wherein the magnetic encoding subsystem comprises an encoding source electrically coupled to said first end of the conducting member and electrically coupled to the other of said electrodes, wherein unipolar current pulses from said encoding source are applied to said electrodes and said conducting member, thereby creating sectional encoded regions in the shaft.
19. A method for encoding a shaft, comprising:
   disposing at least one conducting member in close proximity about a section of said shaft, said conducting member having a first end and a second end;
   disposing electrodes onto said shaft proximate the first end and the second end,
   wherein said electrode is coupled to said second end of said conducting member;
   electrically coupling said first end electrode to a current source and coupling said current source to said first end of said conducting member; and
   applying unipolar current pulses to said conducting members thereby inducing sectional encoding regions.
20. The method of clause 19, wherein at least two of said conducting members are oriented adjacent to each other, wherein said encoding is with opposing polarities such that the resulting polarized magnetic channels have domain boundaries.

## Claims

1. A method (600) for non-contact measurement of a plurality of shaft parameters, comprising:
magnetically encoding (602) a plurality of sections of the shaft using pulsed currents;
sensing (604) a magnetic field of the encoded sections of the shaft using a plurality of sensors arranged circumferentially about the shaft;
generating (606) a spectrum of periodical variations based on sensed magnetic field of the encoded sections of the shaft during rotation; and
determining (608) a plurality of parameters based on recurrences of patterns of the spectrum.

2. The method of claim 1, wherein the encoding (602) comprises disposing at least one conducting member in close proximity about a section of said shaft, said conducting member having a first end and a second end.

3. The method of claim 1 or claim 2, wherein the encoding (602) comprises disposing electrodes onto said shaft proximate the first end and the second end, wherein said second end electrode is coupled to said second end of said conducting member and electrically coupling said first end electrode to a current source and coupling said current source to said first end of said conducting member

4. The method of any preceding claim, wherein the plurality of parameters comprises angular velocity, angular acceleration, rotational frequency spectrum, torque of the shaft and rational anomalies, said rotational anomalies comprises vibration, shock, misalignment and imbalance in the shaft.

5. A system (100, 200, 300) for measuring a plurality of operating parameters of a shaft (12, 52, 102, 302), comprising:
a plurality of magnetic encoded regions (64, 66, 68, 70) circumferentially disposed about a shaft (12, 52, 102, 302);
one or more sensors (104, 306) proximate to said shaft (12, 52, 102, 302) and at least some of the encoded regions (64, 66, 68, 70), wherein said sensors (104, 306) enable measurements of magnetic field properties of the encoded regions (64, 66, 68, 70);
and
a processor for processing said magnetic field properties and computing shaft parameters.

6. The system (100, 200, 300) of claim 5, wherein the sensors (104, 306) comprises Hall effect sensors, magnetic field sensors selected from a group consisting of fluxgate magnetometers, search coils, fiber-optic magnetometers, optically pumped magnetometers, SQUIDs, and nuclear precession magnetometers.

7. The system (100, 200, 300) of claim 5 or claim 6, wherein the system (100, 200, 300) includes a sensor ring assembly comprising an array of sensors and a metallic sensor holder for providing sensor slots and further provides screening against external magnetic field components.

8. The system (100, 200, 300) of any of claims 5 to 7, wherein the system (100, 200, 300) further comprises a magnetic encoding subsystem for sectional encoding of magnetic polarized regions or channels on the shaft, wherein the magnetic encoding subsystem comprises at least one conducting member having a first end and a second end which is disposed proximate said shaft with a gap between said member and said shaft, a pair of electrodes proximate each end of said conducting member and electrically coupled to said shaft, wherein one of said electrodes is electrically coupled to said second end of the conductor member.

9. The system (100, 200, 300) of any of claims 5 to 8, wherein the magnetic encoding subsystem comprises an encoding source electrically coupled to said first end of the conducting member and electrically coupled to the other of said electrodes, wherein unipolar current pulses from said encoding source are applied to said electrodes and said conducting member, thereby creating sectional encoded regions in the shaft.

10. A method for encoding a shaft (12, 52, 102, 302), comprising:
disposing at least one conducting member (18, 20) in close proximity about a section of said shaft(12, 52, 102, 302), said conducting member (18, 20) having a first end and a second end;
disposing electrodes onto said shaft proximate the first end and the second end, wherein said electrode is coupled to said second end of said conducting member(18, 20);
electrically coupling said first end electrode to a current source and coupling said current source to said first end of said conducting member (18, 20); and
applying unipolar current pulses to said conducting members (18, 20) thereby inducing sectional encoding regions.
